# FASCICULE DE BREVET EUROPEEN

(11) **EP 4 269 134 B1**
(45) Date de publication et mention de la délivrance du brevet: **27.05.2026**
(21) Numéro de dépôt: 23169260.9
(22) Date de dépôt: 21.04.2023
(51) Int. Cl.: B60G 3/01, B62D 49/06

(54) **ENJAMBEUR AGRICOLE AVEC UN COUPLAGE AMÉLIORÉ DE LA DIRECTION ET DE LA SUSPENSION**
ÜBERZEILENSCHLEPPER MIT VERBESSERTER LENK- UND AUFHÄNGUNGSKOPPLUNG
AGRICULTURAL HIGH LEG WITH IMPROVED STEERING AND SUSPENSION COUPLING

(30) Priorité: 28.04.2022 FR 2204017
(43) Date de publication de la demande: 01.11.2023
(73) Titulaire: Exel Industries, 51200 Epernay (FR)
(72) Inventeur: BOGE, Anthony, 51160 HAUTVILLERS (FR)
(74) Mandataire: Bandpay & Greuter

(56) Documents cités:
- FR-A1- 3 031 069
- US-B2- 11 166 403

## Description

### DOMAINE TECHNIQUE

La présente invention concerne le domaine des engins motorisés, notamment à usage agricole.

En particulier, la présente invention se rapporte à un engin agricole, par exemple un enjambeur pour la culture des vignes, présentant une maniabilité améliorée

### ETAT DE LA TECHNIQUE

Comme cela est connu, un engin agricole comprend, de manière générale, un châssis sur lequel sont montés des roues, une cabine pour accueillir un conducteur, et des outils montés sur le châssis, par exemple des outils de pulvérisation de produits, de taille des cultures, de récolte, ou encore de travail du sol.

Le document FR3031069A1 divulgue un engin motorisé tel que décrit dans le préambule de la revendication 1.

Dans le contexte de machines à usage agricole, l'un des enjeux réside dans la maniabilité de l'engin agricole par le conducteur. De façon usuelle, un engin agricole à quatre roues comprend un système de direction configuré pour transmettre la direction aux deux roues avant afin d'assurer le guidage et le contrôle du véhicule. De plus, les roues avant étant classiquement localisées sous la cabine, elles sont généralement assorties d'un système de suspension chacune, de sorte à atténuer les vibrations des roues se transmettant à la cabine.

Il est connu de réaliser la direction et la suspension des roues de sorte que la direction est transmise à la roue correspondante par l'intermédiaire du système de suspension. En particulier, le système de direction peut comprendre un vérin de direction entraînant un palonnier de direction centré par rapport aux deux roues avant. Deux barres de direction relient alors le palonnier de direction respectivement aux systèmes de suspension de chacune des deux roues avant. Chacune des deux barres de direction est notamment reliée au système de suspension correspondant par l'intermédiaire d'une liaison rotule. Alors, lorsque la suspension est activée, par exemple lorsque que l'engin opère sur un terrain présentant un dévers ou un relief irrégulier, la barre de direction, entraînée verticalement par le système de suspension, va provoquer un braquage supplémentaire de la roue correspondante.

Par conséquent, les débattements de la suspension influent sur le braquage des roues, pouvant conduire jusqu'à un braquage incontrôlé des roues et une perte d'adhérence des roues, par exemple lors d'un virage. En particulier, lorsque l'engin agricole roule en ligne droite, suite à une activation de la suspension, les roues peuvent ne plus être parallèles l'une par rapport à l'autre. Alors, le conducteur est amené à redresser régulièrement les roues du véhicule, impactant négativement la maniabilité de celui-ci. De plus, la condition de l'épure de Jeantaud, une condition géométrique sur les roues lors d'un braquage afin d'éviter un phénomène de ripage des roues, peut ne plus être respectée.

En réponse à ces inconvénients, la présente invention propose un engin motorisé dont au moins une roue présente un système de direction et un système de suspension connectés cinématiquement entre eux de sorte à limiter l'impact des débattements de la suspension sur la direction de la roue. Ainsi, la présente invention offre l'avantage considérable de permettre une maitrise améliorée de l'engin agricole en ligne droite et lors de virages.

### PRESENTATION DE L'INVENTION

Plus précisément, l'invention a pour objet un engin motorisé comprenant un châssis, un système de suspension mécaniquement couplé d'une part à une roue de l'engin motorisé et d'autre part au châssis, et un système de direction configurée pour transmettre la direction à ladite roue de l'engin motorisé par l'intermédiaire du système de suspension, le système de direction étant en liaison mécanique de type glissière avec le système de suspension selon l'axe du système de suspension.

De plus, le système de direction comprend une bielle principale en liaison mécanique de type pivot avec le châssis, une tige de renvoi mécaniquement couplée à la bielle principale et orientée selon l'axe du système de suspension, et une bielle secondaire d'une part mécaniquement couplée au système de suspension et d'autre part en liaison mécanique de type pivot glissant avec la tige de renvoi, de sorte que le système de direction est en liaison mécanique de type glissière avec le système de suspension.

Selon un mode de réalisation, l'axe du système de suspension est substantiellement vertical.

Avantageusement, le système de suspension comprenant une tige de pivot de suspension et un fourreau de guidage configuré pour recevoir la tige de pivot de suspension, le fourreau de guidage étant mécaniquement couplé au châssis et étant en liaison mécanique de type pivot avec la bielle principale, la tige de pivot de suspension étant par ailleurs mécaniquement couplée d'une part à la roue correspondante et d'autre part à la bielle secondaire du système de direction.

En particulier, l'engin motorisé peut comprendre un vérin de direction, le système de direction comprenant une barre de direction en liaison mécanique de type rotule avec la bielle principale, et le vérin de direction étant configuré pour transmettre la direction à la bielle principale par l'intermédiaire de la barre de direction.

Selon un mode de réalisation, l'engin motorisé forme un engin motorisé à quatre roues, l'engin motorisé comprenant deux systèmes de suspension, deux systèmes de direction, chacun des deux systèmes de suspension et chacun des deux systèmes de direction étant respectivement associé à l'une et à l'autre des deux roues avant de l'engin motorisé.

Notamment, le vérin de direction peut consister en un vérin double tige, chacun des systèmes de direction, associé respectivement à l'une et à l'autre des deux roues avant de l'engin motorisé, comprenant une pièce de liaison connectant mécaniquement le vérin double tige à la barre de direction correspondante.

Avantageusement, le vérin de direction est aménagé substantiellement parallèlement à un axe reliant les deux roues avant de l'engin motorisé.

L'engin motorisé selon l'invention forme par exemple un enjambeur pour les cultures de vignes.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
[Fig. 1] : la figure 1 est une représentation schématique d'une vue en perspective d'un exemple d'engin motorisé selon un mode de réalisation de l'invention ;
[Fig. 2] et [Fig. 3] : les figures 2 et 3 sont des représentations schématiques d'une vue partielle de face de l'exemple d'engin motorisé selon un mode de réalisation de l'invention, respectivement lorsque les systèmes de suspension sont en position neutre et lorsque les systèmes de suspension sont en position active ;
[Fig. 4] : la figure 4 est une représentation schématique d'une vue partielle en coupe de l'exemple d'engin motorisé selon un mode de réalisation de l'invention ;
[Fig. 5] et [Fig. 6] : les figures 5 et 6 sont des représentations schématiques d'une vue partielle de haut de l'exemple d'engin motorisé selon un mode de réalisation de l'invention, respectivement lorsque les roues sont droites et lorsque les roues sont braquées ;
[Fig. 7] : la figure 7 est une représentation schématique d'une vue partielle de haut d'un autre exemple d'engin motorisé selon un mode de réalisation de l'invention.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne un engin motorisé, notamment de type enjambeur agricole pour la culture de vignes, en particulier un engin motorisé à quatre roues. De plus, l'engin motorisé peut être un véhicule automoteur ou tracté.

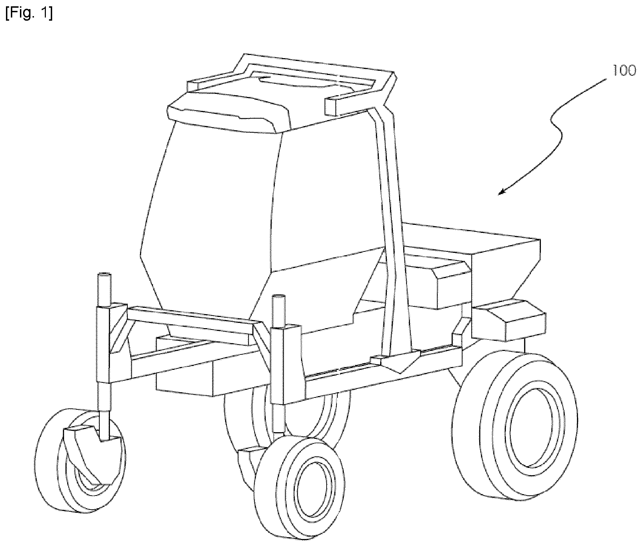

La figure 1 illustre une vue en perspective d'un exemple de l'engin motorisé 100 selon l'invention. L'engin motorisé 100 comprend un châssis 30. Des outillages pourront notamment être fixés au châssis 30 de l'engin, par exemple des outillages de pulvérisation de produits, de travail du sol, ou encore de taille des cultures.

Par ailleurs, l'engin motorisé 100 peut comprendre une cabine (non représentée sur les figures), notamment montée sur le train avant de l'engin. On entend par train avant, un ensemble d'organes mécaniques situés dans la partie avant de l'engin, entre autres, les roues avant, et les organes mécaniques assurant la direction et la suspension des roues. La cabine est configurée pour accueillir un conducteur de l'engin, dont la présente invention vise à améliorer la maniabilité de conduite.

L'engin motorisé est, de manière générale, équipé d'un moteur thermique, d'un moteur électrique ou d'un moteur alimenté par un pile à hydrogène configuré pour alimenter une pompe hydraulique. Ensuite, la pompe hydraulique entraîne à son tour au moins un moteur hydraulique, de préférence deux moteurs hydrauliques. Chaque moteur hydraulique est aménagé au niveau du moyeu de l'une des roues de l'engin, de sorte à entraîner en rotation la roue correspondante, alors appelée roue motrice. Un tel moteur hydraulique intégré à la roue est communément appelé moteur hydraulique « intra-roue ». Le moteur hydraulique peut avantageusement comprendre un système de freinage intégré. Le ou les moteurs hydrauliques sont ensuite reliés à la pompe hydraulique par l'intermédiaire d'un circuit hydraulique, présentant par exemple des conduites flexibles.

La présente invention concerne aussi une roue directrice et suspendue pour l'engin motorisé, permettant une maniabilité améliorée de l'engin. Dans la suite de la description, l'invention sera décrite dans le contexte non-limitatif d'un engin motorisé présentant deux roues avant suspendues et directrices. Ainsi, on va s'intéresser en particulier au train avant de l'engin motorisé.

Par ailleurs, les deux roues avant sont de préférence motrices. Le cas échéant les deux roues avant intègrent chacune un moteur hydraulique associé. Néanmoins, l'invention peut également s'appliquer à des roues non-motrices.

Par soucis de simplification, l'arrangement mécanique des différents organes sera détaillé uniquement pour une roue directrice et suspendue de l'engin motorisé, bien que l'invention soit de préférence mise en oeuvre sur les deux roues avant de l'engin.

L'engin motorisé comprend un système de suspension 10 associé à la roue 40 correspondante, permettant notamment d'amortir les vibrations de la roue 40 correspondante. De manière préférée, l'engin motorisé comprend deux systèmes de suspension 10, chacun des deux systèmes de suspension 10 étant associé à l'une des deux roues avant de l'engin.

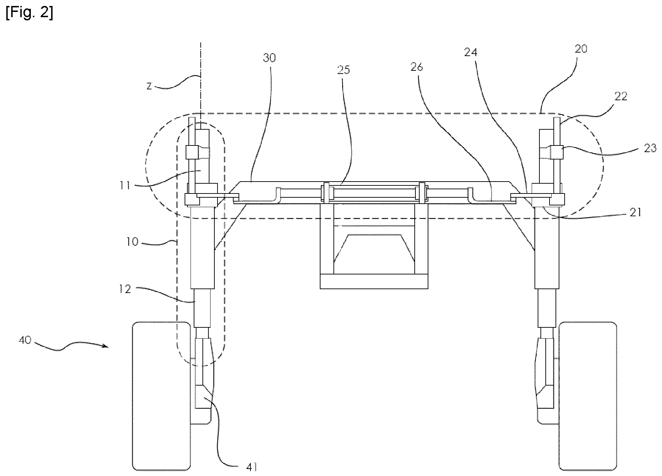

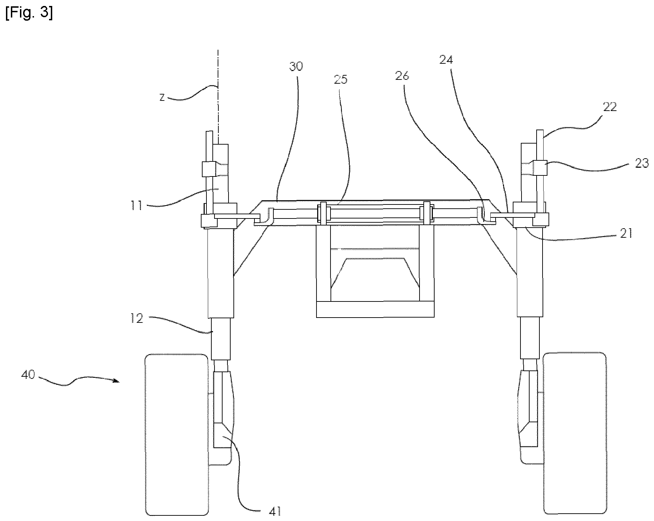

Les figures 2 et 3 illustrent un exemple de l'engin motorisé selon l'invention vue de face respectivement lorsque le système de suspension 10 est en position neutre (figure 2) et lorsque le système de suspension 10 est en position active (figure 3). La position neutre correspond à une position du système de suspension lorsque l'engin motorisé est positionné à plat sur un terrain. De préférence, la position neutre peut correspondre à la mi-course du système de suspension 10. Néanmoins, le système de suspension 10 peut avoir une autre position neutre, l'ajustement de la position neutre permettant avantageusement de régler la hauteur de l'avant du châssis 30, de sorte à adapter la hauteur d'un outil telle qu'une rogneuse par exemple. La position active du système de suspension correspond alors à une position qui n'est pas la position neutre.

Lorsque les deux roues avant sont suspendues, les deux systèmes de suspension respectifs peuvent être dépendants ou indépendants l'un de l'autre. On peut noter que des systèmes de suspension dépendants présentent l'avantage d'être plus robustes.

Le système de suspension 10 est mécaniquement couplé d'une part à la roue 40 correspondante de l'engin motorisé et d'autre part au châssis 30 de l'engin motorisé. On entend par mécaniquement couplés qu'au moins une partie des éléments respectifs sont solidaires l'un de l'autre.

De plus, l'engin motorisé comprend un système de direction 20 configuré pour transmettre la direction à la roue 40 correspondante de l'engin motorisé par l'intermédiaire du système de suspension 10. Autrement dit, le système de suspension 10 est utilisé pour transmettre la direction à la roue 40 correspondante.

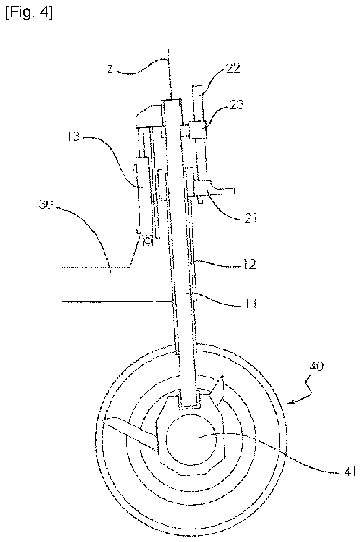

La figure 4 représente une vue latérale en coupe dudit exemple d'engin motorisé selon l'invention. Lorsque la roue 40 directrice et suspendue selon l'invention intègre un moteur hydraulique 41, le système de suspension 10 est, de préférence, mécaniquement couplé à une partie fixe du moteur hydraulique 41, c'est-à-dire à une partie du moteur hydraulique 41 ne tournant pas selon l'axe de rotation de la roue 40 correspondante, à savoir par exemple le carter du moteur hydraulique 41. On entend notamment par mécaniquement couplés qu'au moins une partie du système de suspension 10 et que la partie fixe du moteur hydraulique 41 sont mécaniquement solidaires l'un de l'autre. Autrement dit, que ladite partie du système de suspension 10 est fixée de manière rigide au moteur hydraulique 41.

Dans la présente invention, on s'intéresse en particulier à l'arrangement cinématique entre la roue 40, et le système de suspension 10 et le système de direction 20 associés. Dans l'invention, le système de direction 20 est en liaison mécanique de type glissière avec le système de suspension 10 selon l'axe Z du système de suspension 10. En particulier, l'axe Z du système de suspension 10 peut avantageusement être substantiellement vertical, la direction verticale correspondant ici à la direction verticale de l'engin motorisé. L'axe Z peut par exemple être légèrement incliné, par exemple de 4° environ, par rapport à la verticale.

La présente invention, en mettant en oeuvre une liaison de type glissière, selon l'axe de débattement du système de suspension, entre le système de direction et le système de suspension, offre l'avantage de réduire considérablement, voire offre l'avantage d'éliminer, les couplages entre les mouvements du système de suspension et du système de direction selon la direction de l'axe de suspension. Ainsi, grâce à l'invention, les mouvements de compression et de détente du système de suspension n'entraînent pas de braquage de la roue correspondante, car il y a un découplage entre les mouvements verticaux du système de suspension et la transmission de la direction aux roues.

En conséquence, l'invention permet avantageusement de maintenir les roues parallèles lorsque l'engin roule en ligne droite, et ceci même lorsque la suspension est active. Cela est notamment le cas lorsque l'engin roule sur des aspérités du terrain, par exemple sur des cailloux, ou encore en présence de dévers du terrain. Le maintien des roues parallèles en ligne droite permet également d'augmenter la durée de vie des pneus des roues.

L'invention permet également d'augmenter les plages admissibles du rayon de braquage des roues lorsque la suspension est active. En effet, lorsque le véhicule tourne, s'il y a un couplage entre le braquage des roues et les oscillations du système de suspension, les mouvements du système de suspension peuvent induire un effort contraire à la direction de braquage transmise par le système de direction. Le braquage des roues se retrouve alors limité dans ces conditions. La présente invention permet de s'affranchir de ce problème, et de tirer parti d'une amplitude plus élevée du rayon de braquage.

En outre, la présente invention permet de respecter la condition de l'épure de Jeantaud. La condition de l'épure de Jeantaud est une condition géométrique bien connue dans le domaine de l'automobile, définissant que le centre de braquage des roues avant directrices doit être situé sur la continuité de l'essieu arrière de l'engin. Le respect de la condition de l'épure de Jeantaud permet de réduire le risque de ripage des roues lors d'un virage.

En résumé, la présente invention permet de faciliter la maniabilité de conduite de l'engin motorisé par un utilisateur, en ligne droite, tout comme lors de la réalisation de manœuvres de virage, par exemple de type demi-tours en bout de rang.

Le système de suspension 10 sera maintenant décrit de manière plus détaillée.

En référence à la figure 4, le système de suspension 10 comprend de préférence une tige de pivot de suspension 11 et un fourreau de guidage 12 configuré pour recevoir la tige de pivot de suspension 11. La tige de pivot de suspension 11 et le fourreau de guidage 12 sont de préférence en liaison mécanique de type pivot glissant l'un avec l'autre. La présente invention rend en effet possible de mettre en œuvre une liaison pivot glissant entre la tige de pivot de suspension 11 et le fourreau de guidage 12, qui est une liaison plus simple à mettre en œuvre du point de vue de la production. En effet, une liaison de type glissière entre le fourreau de guidage 12 et la tige de pivot de suspension 11 est généralement réalisée au moyen de cannelures aménagées entre le fourreau de guidage 12 et la tige de pivot de suspension 11, ce qui peut se révéler coûteux et complexe à mettre en œuvre. L'invention permet d'éviter par conséquent l'utilisation de cannelures, et donc permet de simplifier la production de l'engin motorisé et de réduire les coûts associés.

Alors, le fourreau de guidage 12 est préférablement mécaniquement couplé au châssis 30. Ensuite, la tige de pivot de suspension 11 est de préférence mécaniquement couplée à la roue 40 correspondante d'une part et au système de direction 20 d'autre part. Pour rappel, on entend par mécaniquement couplés que les éléments respectifs sont mécaniquement solidaires l'un de l'autre. Ainsi, la tige de pivot de suspension 11 est utilisée pour transmettre la direction à la roue 40 correspondante. Ceci permet avantageusement d'améliorer la robustesse de la transmission de la direction.

En outre, le système de suspension 10 peut comprendre un vérin de suspension 13 mécaniquement couplé d'une part à la tige de pivot de suspension 11, notamment sur une partie haute de la tige de pivot de suspension 11, et d'autre part au fourreau de suspension 12 ou directement au châssis 30 de l'engin motorisé. Le vérin de suspension 13 est, de préférence, un vérin hydraulique, mais peut également être un vérin pneumatique. Le vérin de suspension 13 contribue ainsi à la fois à la suspension et à l'amortissement de la roue 40 correspondante.

Lorsque les deux roues avant sont suspendues, les deux systèmes de suspension respectifs peuvent comprendre chacun un vérin de suspension. Alors, les deux vérins de suspension peuvent être dépendants l'un de l'autre, notamment en mutualisant le circuit hydraulique alimentant les deux vérins de suspension. Par exemple, lorsque l'une des deux roues roule sur une bosse, le fluide du circuit hydraulique, en particulier de l'huile, est renvoyé depuis le vérin de suspension associé à la roue roulant sur la bosse à l'autre vérin de suspension associé à l'autre roue. L'utilisation des deux vérins de suspension favorise la réalisation d'un appui sur trois roues de l'engin motorisé tout en limitant les débattements des roues. Ceci permet de créer une fonction de palonnier et ainsi d'améliorer la stabilité de la machine et favoriser l'accroche des roues de l'engin motorisé au sol.

Le système de suspension 10 peut aussi comprendre classiquement un ressort ou un ensemble de ressorts (non illustré sur les figures).

Le système de direction va maintenant être décrit plus en détails.

Comme illustré sur les figures 2 à 4, dans un mode de réalisation préféré de l'invention, pour chacune des roues directrices et suspendues selon l'invention, le système de direction 20 comprend une bielle principale 21 configurée pour transmettre la direction à la roue 40 correspondante. La bielle principale 21 est en liaison mécanique de type pivot avec le châssis 30, ou lorsque c'est approprié avec le fourreau de guidage 12 du système de suspension 10 (le fourreau de guidage 12 étant en particulier fixé au châssis 30). La liaison pivot peut par exemple être réalisée au moyen de roulements aménagés sur une face intérieure de la bielle principale 21.

De plus, le système de direction 20 comprend, pour la roue 40 correspondante, une tige de renvoi 22 mécaniquement couplée à la bielle principale 21 et orientée selon l'axe Z du système de suspension 10, et une bielle secondaire 23 d'une part mécaniquement couplée au système de suspension 10 et d'autre part en liaison mécanique de type pivot glissant avec la tige de renvoi 22. La bielle secondaire 23 peut alternativement être en liaison mécanique de type glissière avec la tige de renvoi 22. La bielle secondaire 23 est en particulier fixée à la tige de pivot de suspension 11 du système de suspension 10.

Ainsi, la rotation de la bielle principale 21 autour de son axe, va entraîner la rotation de la tige de renvoi 22 autour de ce même axe, car la tige de renvoi 22 est mécaniquement solidaire de la bielle principale 21. La rotation de la tige de renvoi 22 va ensuite induire la rotation de la bielle secondaire 23 qui va alors transmettre ce mouvement à la tige de pivot de suspension 11, qui va entraîner le braquage de la roue 40 correspondante.

L'ensemble formé par la bielle secondaire 23 et la tige de pivot de suspension 11 est en liaison mécanique de type glissière, selon l'axe du système de suspension 10, par rapport à l'ensemble bielle principale 21 et tige de renvoi 22. Par conséquent, la tige de pivot de suspension 11 peut monter ou descendre sans influer sur la transmission de la direction à la roue correspondante. De ce fait, l'alignement de la chaine cinématique formée successivement par la bielle principale, la tige de renvoi, et la bielle secondaire permet de maintenir le parallélisme des roues en ligne droite et de respecter la condition de l'épure de Jeantaud.

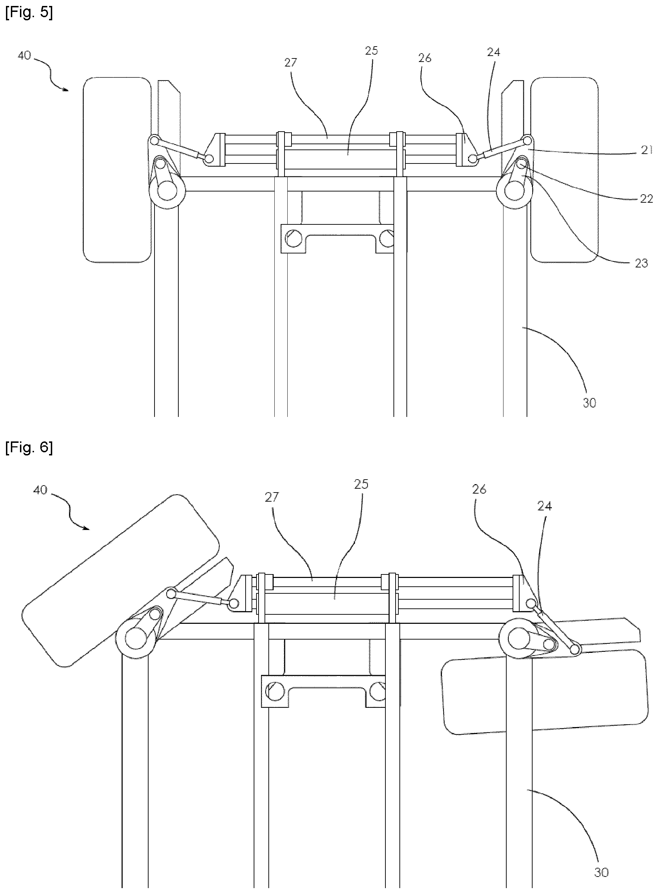

Les figures 5 et 6 représentent une vue de haut de l'exemple de l'engin agricole selon l'invention dans deux configurations différentes de braquage des roues directrices et suspendues, respectivement une première configuration dans laquelle les roues sont droites, et une seconde configuration dans laquelle les roues sont braquées (sur la figure 6, les roues sont braquées au maximum vers la droite).

L'engin motorisé comprend en particulier un vérin de direction 25 configuré pour transmettre la direction aux roues directrices.

Le système de direction 20, pour la roue 40 correspondante, peut comprendre une barre de direction 24. Alors, le vérin de direction 25 peut transmettre la direction aux roues directrices, respectivement en poussant ou en tirant sur la barre de direction 24.

La barre de direction 24 est alors de préférence en liaison mécanique de type rotule avec la bielle principale 21 de la roue 40 correspondante. Autrement dit, le vérin de direction 25 transmet la direction à la bielle principale 21 par l'intermédiaire de la barre de direction 24.

Plus précisément, le système de direction peut comprendre une pièce de liaison 26 adaptée pour connecter mécaniquement le vérin de direction 25 d'une part et la barre de direction 24 d'autre part. Notamment, la pièce de liaison 26 peut être fixée au vérin de direction 25. La barre de direction 24 peut avantageusement être en liaison mécanique de type rotule avec la pièce de liaison 26.

En outre, on peut noter que dans le contexte de deux roues avant directrices et suspendues selon l'invention, à chacune des roues sont associés un système de suspension et un système de direction tel que décrits précédemment. De plus, un unique vérin de direction est suffisant pour entrainer les deux systèmes de direction (chaque système de direction étant associé à une roue), et donc pour diriger les deux roues du train avant de l'enjambeur.

Le vérin de direction 25 est notamment fixé sur le châssis 30, en particulier vers le centre du train avant de l'engin motorisé, autrement dit au milieu des deux roues avant. De plus, le vérin de direction 25 est de préférence aligné, ou encore aménagé de manière substantiellement parallèle, à un axe reliant les deux roues directrices et suspendues.

Le vérin de direction 25 consiste de préférence en un vérin double tige. L'utilisation d'un vérin double tige permet avantageusement de se passer de l'utilisation d'un élément complexe de type palonnier apte à transmettre la direction aux deux barres de direction directement. Aussi, chaque pièce de liaison, respectivement de chacun des systèmes de direction (associé respectivement à l'une et à l'autre des deux roues avant de l'engin motorisé), connecte mécaniquement le vérin double tige à la barre de direction 24 du système de direction correspondant. Autrement dit, les pièces de liaison sont fixées de part et d'autre du vérin de direction. Cette configuration facilite la mise en place du vérin de direction parallèlement à l'axe axe reliant les deux roues directrices et suspendues.

De plus, le système de direction peut comprendre une tige de renfort 27 aménagée en parallèle du vérin de direction 25 de sorte à permettre une reprise des efforts mécaniques, et ainsi de diminuer les efforts mécaniques transmis à travers le vérin de direction 25.

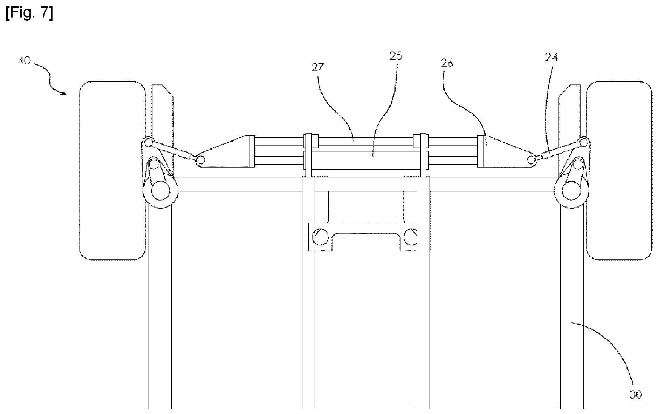

La figure 7 représente une vue partielle de haut d'un autre exemple d'engin motorisé selon l'invention. Dans cette configuration, la longueur des pièces de liaison 26 entre le vérin de direction 25 et les barres de direction 24 est adaptée. En effet, le système de direction selon l'invention permet d'ajuster facilement les pièces de liaison 26 à la configuration de l'engin motorisé pour pouvoir garantir le respect de la condition de l'épure de Jeantaud.

Selon un autre mode de réalisation de l'invention, non représenté sur les figures, l'engin motorisé pourrait comprendre comprenant un vérin de direction entraînant un palonnier de direction centré par rapport aux deux roues avant. Ensuite, deux barres de direction pourraient relier respectivement chacune des deux roues avant au palonnier de direction. Plus précisément, les barres de direction pourraient être connectées aux roues par l'intermédiaire des ensembles précédemment décrits comprenant les bielles principales, les tiges de renvoi, et les bielles secondaires. Le mouvement du palonnier va ainsi agir sur les barres de direction, qui vont à leur tour entraîner les bielles principales. Les bielles principales vont transmettre le mouvement aux tiges de renvoi qui vont entraîner les bielles secondaires. Ensuite, les bielles secondaires vont entraîner en rotation le système de suspension, et enfin la roue correspondante. Dans ce mode de réalisation de l'invention, seule la partie en amont des systèmes de direction, à savoir l'intégration mécanique du vérin de direction et des barres de direction est différente. Les détails de réalisation décrits précédemment des systèmes de suspension et de la partie en aval des systèmes de direction, à savoir la mise en place de la liaison de type glissière entre le système de direction et le système de suspension, s'appliquent à ce mode de réalisation.

En résumé, l'intégration mécanique du système de suspension et du système de direction pour une roue directrice et suspendue selon l'invention permet au conducteur de mieux contrôler et de mieux diriger son véhicule. Le conducteur du véhicule profite en effet d'un meilleur confort de conduite de son véhicule en ligne droite, c'est-à-dire sans qu'il ait à redresser trop régulièrement, ou avec trop d'efforts les roues de son véhicule. De plus, les manœuvres de conduite dans les virages sont aussi facilitées. La présente invention permet donc d'éviter l'occurrence d'un phénomène de braquage incontrôlé des roues, et permet une meilleure prise au sol des roues en ligne droite tout comme en virage, ceci tout en limitant les vibrations transmises par les roues aux commandes du véhicule lorsque la route est accidentée. En outre, la présente invention permet de limiter l'usure des pneumatiques de l'engin motorisé.

## Revendications

1. Engin motorisé (100) comprenant un châssis (30), un système de suspension (10) mécaniquement couplé d'une part à une roue (40) de l'engin motorisé (100) et d'autre part au châssis (30), et un système de direction (20) configuré pour transmettre la direction à ladite roue (40) de l'engin motorisé (100) par l'intermédiaire du système de suspension (10), le système de direction (20) comprenant une bielle principale (21) en liaison mécanique de type pivot avec le châssis (30), une tige de renvoi (22) mécaniquement couplée à la bielle principale (21) et orientée selon l'axe (Z) du système de suspension (10),
**caractérisé en ce que** le système de direction comprend
une bielle secondaire (23) d'une part mécaniquement couplée au système de suspension (10) et d'autre part en liaison mécanique de type pivot glissant avec la tige de renvoi (22), de sorte que le système de direction (20) est en liaison mécanique de type glissière avec le système de suspension (10) selon l'axe (Z) du système de suspension (10).

2. Engin motorisé (100) selon la revendication précédente, **caractérisé en ce que** l'axe (Z) du système de suspension (10) est substantiellement vertical.

3. Engin motorisé (100) selon la revendication précédente, le système de suspension (10) comprenant une tige de pivot de suspension (11) et un fourreau de guidage (12) configuré pour recevoir la tige de pivot de suspension (11), **caractérisé en ce que** le fourreau de guidage (12) est mécaniquement couplé au châssis (30) et est en liaison mécanique de type pivot avec la bielle principale (21), et **en ce que** la tige de pivot de suspension (11) est mécaniquement couplée d'une part à la roue (40) correspondante et d'autre part à la bielle secondaire (23) du système de direction (20).

4. Engin motorisé (100) selon l'une quelconque des revendications 2 ou 3, comprenant un vérin de direction (25), **caractérisé en ce que** le système de direction (20) comprend une barre de direction (24) en liaison mécanique de type rotule avec la bielle principale (21), le vérin de direction (25) étant configuré pour transmettre la direction à la bielle principale (21) par l'intermédiaire de la barre de direction (24).

5. Engin motorisé (100) selon l'une quelconque des revendications précédentes, formant un engin motorisé (100) à quatre roues, l'engin motorisé (100) comprenant deux systèmes de suspension (10), deux systèmes de direction (20), chacun des deux systèmes de suspension (10) et chacun des deux systèmes de direction (20) étant respectivement associé à l'une et à l'autre des deux roues avant de l'engin motorisé (100).

6. Engin motorisé (100) selon la revendication précédente combinée avec la revendication 4, **caractérisé en ce que** le vérin de direction (25) consiste en un vérin double tige, chacun des systèmes de direction (20), associé respectivement à l'une et à l'autre des deux roues avant de l'engin motorisé (100), comprenant une pièce de liaison (26) connectant mécaniquement le vérin double tige à la barre de direction (24) correspondante.

7. Engin motorisé (100) selon la revendication précédente, **caractérisé en ce que** le vérin de direction (25) est aménagé substantiellement parallèlement à un axe reliant les deux roues avant de l'engin motorisé (100).

8. Engin motorisé (100) selon l'une quelconque des revendications précédentes formant un enjambeur pour les cultures de vignes.

## Patentansprüche

1. Motorisiertes Fahrzeug (100), umfassend ein Fahrgestell (30), ein Aufhängungssystem (10), das einerseits mit einem Rad (40) des motorisierten Fahrzeugs (100) und andererseits mit dem Fahrgestell (30) mechanisch gekoppelt ist, und ein Lenksystem (20), das konfiguriert ist, um die Lenkung an das Rad (40) des motorisierten Fahrzeugs (100) mit Hilfe des Aufhängungssystems (10) zu übertragen, wobei das Lenksystem (20) eine Hauptverbindungsstange (21) in mechanischer Verbindung vom Typ Drehpunkt mit dem Fahrgestell (30) umfasst, eine Rückstellstange (22), die mit der Hauptverbindungsstange (21) mechanisch gekoppelt ist und entlang der Achse (Z) des Aufhängungssystems (10) ausgerichtet ist, **dadurch gekennzeichnet, dass** das Lenksystem eine sekundäre Verbindungsstange (23) umfasst, die einerseits mit dem Aufhängungssystem (10) und andererseits in mechanischer Verbindung vom Typ Drehpunkt mit der Rückstellstange (22) gleitend gekoppelt ist, sodass das Lenksystem (20) in mechanischer Verbindung vom Typ Laufschiene mit dem Aufhängungssystem (10) entlang der Achse (Z) des Aufhängungssystems (10) ist.

2. Motorisiertes Fahrzeug (100) nach dem vorhergehenden Anspruch, **dadurch gekennzeichnet, dass** die Achse (Z) des Aufhängungssystems (10) im Wesentlichen vertikal verläuft.

3. Motorisiertes Fahrzeug (100) nach dem vorhergehenden Anspruch, wobei das Aufhängungssystem (10) einen Aufhängungsdrehstift (11) und eine Führungshülse (12) umfasst, die konfiguriert ist, um den Aufhängungsdrehstift (11) aufzunehmen, **dadurch gekennzeichnet, dass** die Führungshülse (12) mechanisch mit dem Fahrgestell (30) gekoppelt ist und in mechanischer Verbindung vom Typ Drehpunkt mit der Hauptverbindungsstange (21) ist, und dadurch, dass der Aufhängungsdrehpunkt (11) mechanisch einerseits mit dem entsprechenden Rad (40) und andererseits mit der sekundären Verbindungsstange (23) des Lenksystems (20) gekoppelt ist.

4. Motorisiertes Fahrzeug (100) nach einem der Ansprüche 2 oder 3, umfassend einen Lenkzylinder (25), **dadurch gekennzeichnet, dass** das Lenksystem (20) eine Lenkstange (24) in mechanischer Verbindung vom Typ Kugelgelenk mit der Hauptpleuelstange (21) umfasst, wobei der Lenkzylinder (25) konfiguriert ist, um die Lenkung mit Hilfe der Lenkstange (24) auf die Hauptpleuelstange (21) zu übertragen.

5. Motorisiertes Fahrzeug (100) nach einem der vorhergehenden Ansprüche, das ein motorisiertes Fahrzeug (100) mit vier Rädern bildet, wobei das motorisierte Fahrzeug (100) zwei Aufhängungssysteme (10), und zwei Lenksysteme (20) umfasst, wobei jedes der zwei Aufhängungssysteme (10) und jedes der zwei Lenksysteme (20) jeweils dem einen und dem anderen der zwei Vorderräder des motorisierten Fahrzeugs (100) zugeordnet ist.

6. Motorisiertes Fahrzeug (100) nach dem vorhergehenden Anspruch in Kombination mit Anspruch 4, **dadurch gekennzeichnet, dass** das Lenksystem (25) aus einem Doppelstangenzylinder besteht, wobei jedes der zwei Lenksysteme (20) jeweils dem einen und dem anderen der zwei Vorderräder des motorisierten Fahrzeugs (100) zugeordnet ist, umfassend ein Verbindungsstück (26), das mechanisch den Doppelstangenzylinder mit der entsprechenden Lenkstange (24) verbindet.

7. Motorisiertes Fahrzeug (100) nach dem vorhergehenden Anspruch, **dadurch gekennzeichnet, dass** der Lenkzylinder (25) im Wesentlichen parallel zu einer Achse angeordnet ist, die die beiden Vorderräder des motorisierten Fahrzeugs (100) verbindet.

8. Motorisiertes Fahrzeug (100) nach einem der vorhergehenden Ansprüche, das einen Überzeilenschlepper für den Weinbau bildet.

## Claims

1. Motorized machine (100) comprising a chassis (30), a suspension system (10) mechanically coupled on the one hand to a wheel (40) of the motorized machine (100) and on the other hand to the chassis (30), and a steering system (20) configured to transmit the steering to said wheel (40) of the motorized machine (100) through the suspension system (10), the steering system (20) comprising a main connecting rod (21) in a pivot-type mechanical connection with the chassis (30), a deflector rod (22) mechanically coupled to the main connecting rod (21) and oriented along the axis (Z) of the suspension system (10), **characterized in that** the steering system comprises
a secondary connecting rod (23) mechanically coupled to the suspension system (10) on the one hand and in a sliding-pivot-type mechanical connection with the deflector rod (22) on the other, so that the steering system (20) is in a slide-type mechanical connection with the suspension system (10) along the axis (Z) of the suspension system (10).

2. Motorized machine (100) according to the preceding claim, **characterized in that** the axis (Z) of the suspension system (10) is substantially vertical.

3. Motorized machine (100) according to the preceding claim, the suspension system (10) comprising a suspension pivot rod (11) and a guide sleeve (12) configured to receive the suspension pivot rod (11), **characterized in that** the guide sleeve (12) is mechanically coupled to the chassis (30) and is in a pivot-type mechanical connection with the main connecting rod (21), and **in that** the suspension pivot rod (11) is mechanically coupled on the one hand to the corresponding wheel (40) and on the other hand to the secondary connecting rod (23) of the steering system (20).

4. Motorized machine (100) according to any one of claims 2 or 3, comprising a steering cylinder (25), **characterized in that** the steering system (20) comprises a steering rod (24) in a ball joint-type mechanical connection with the main connecting rod (21), the steering cylinder (25) being configured to transmit the steering to the main connecting rod (21) through the steering rod (24).

5. Motorized machine (100) according to any one of the preceding claims, forming a four-wheeled motorized machine (100), the motorized machine (100) comprising two suspension systems (10), two steering systems (20), each of the two suspension systems (10) and each of the two steering systems (20) being respectively associated with one and the other of the two front wheels of the motorized machine (100).

6. Motorized machine (100) according to the preceding claim combined with claim 4, **characterized in that** the steering cylinder (25) consists of a double rod cylinder, each of the steering systems (20), associated respectively with one and the other of the two front wheels of the motorized machine (100), comprising a connecting part (26) mechanically connecting the double rod cylinder to the corresponding steering rod (24).

7. Motorized machine (100) according to the preceding claim, **characterized in that** the steering cylinder (25) is substantially arranged parallel to an axle connecting the two front wheels of the motorized machine (100).

8. Motorized machine (100) according to any one of the preceding claims forming a high-clearance machine for vine crops.
